# EUROPÄISCHE PATENTSCHRIFT

(11) **EP 2 607 439 B1**
(45) Veröffentlichungstag und Bekanntmachung des Hinweises auf die Patenterteilung: **16.10.2024**
(21) Anmeldenummer: 12193853.4
(22) Anmeldetag: 22.11.2012
(51) Int. Cl.: C09J 7/40

(54) **LINER ZUM SCHUTZ VON KLEBEMASSEN**
Liner for the protection of adhesive masses
Revêtement de protection de masses de collage

(30) Priorität: 22.12.2011 DE 102011089566
(43) Veröffentlichungstag der Anmeldung: 26.06.2013
(73) Patentinhaber: tesa SE, 22848 Norderstedt (DE)
(72) Erfinder: BAI, Minyoung, 22529 Hamburg (DE); DOLLASE, Thilo, 22397 Hamburg (DE); KEITE-TELGENBÜSCHER, Klaus, 22529 Hamburg (DE); LÜHMANN, Bernd, 22844 Norderstedt (DE)
(74) Vertreter: tesa SE

(56) Entgegenhaltungen:
- WO-A1-00/34035
- WO-A1-2008/072115
- WO-A1-2009/059299
- US-A- 4 502 903

## Beschreibung

Die vorliegende Erfindung betrifft das technische Gebiet der Liner zum Schutz von Klebemassen, wie sie beispielsweise für Klebebänder verwendet werden. Es wird ein neuer derartiger Liner mit verbesserter Schutzfunktion insbesondere gegenüber permeationsfähigen Substanzen vorgeschlagen. Die Erfindung betrifft weiterhin eine mit dem Liner zumindest partiell bedeckte Klebemasse sowie ein Verfahren zum Schützen einer Klebemasse und die Verwendung von Gettermaterialien in Linern. Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.

Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, ferner Elektrolumineszenzlampen, Licht emittierende elektrochemische Zellen (LEECs), organische Solarzellen wie Farbstoff- oder Polymersolarzellen, anorganische Solarzellen, insbesondere Dünnschichtsolarzellen, zum Beispiel auf der Basis von Silizium, Germanium, Kupfer, Indium und Selen, organische Feldeffekt-Transistoren, organische Schaltelemente, organische optische Verstärker, organische Laserdioden, organische oder anorganische Sensoren oder auch organisch- oder anorganisch basierte RFID-Transponder angeführt.

Als technische Herausforderung für die Realisierung einer ausreichenden Lebensdauer und Funktion von optoelektronischen Anordnungen auf dem Gebiet der anorganischen und organischen Optoelektronik, ganz besonders der organischen Optoelektronik, ist ein Schutz der darin enthaltenen Komponenten vor Permeaten zu sehen. Als Permeate werden dabei in der Regel gasförmige oder flüssige Stoffe angesehen, die in einen Festkörper eindringen und diesen gegebenenfalls durchdringen beziehungsweise durchwandern. Dementsprechend können viele niedermolekulare organische oder anorganische Verbindungen Permeate sein, wobei im vorliegend beschriebenen Zusammenhang Wasserdampf und Sauerstoff von besonderer Bedeutung sind.

Eine Vielzahl von optoelektronischen Anordnungen - besonders bei Verwendung von organischen Materialien - ist sowohl gegen Wasserdampf als auch gegen Sauerstoff empfindlich. Während der Lebensdauer der elektronischen Anordnungen ist deshalb ein Schutz durch eine Verkapselung erforderlich, da andernfalls die Leistung über den Anwendungszeitraum nachlässt. Anderenfalls können sich beispielsweise durch eine Oxidation der Bestandteile von Licht emittierenden Anordnungen wie Elektrolumineszenz-Lampen (EL-Lampen) oder organischen Leuchtdioden (OLED) die Leuchtkraft, bei elektrophoretischen Displays (EP-Displays) der Kontrast oder bei Solarzellen die Effizienz innerhalb kurzer Zeit drastisch verringern.

Auf dem Gebiet der anorganischen und insbesondere der organischen Optoelektronik gibt es daher einen hohen Bedarf für flexible Klebelösungen, die eine Barriere für Permeate wie Sauerstoff und/oder Wasserdampf darstellen. Im Stand der Technik sind bereits einige Ansätze für derartige Klebelösungen zu finden.

So werden häufiger Flüssigklebstoffe und Adhäsive auf Basis von Epoxiden als Barriereklebemassen verwendet, wie sie beispielsweise in WO 98/21287 A1, US 4,051,195 A und US 4,552,604 A beschrieben sind. Ihr Haupteinsatzgebiet sind Randverklebungen starrer Anordnungen, aber auch mäßig flexible Anordnungen. Die Aushärtung erfolgt thermisch oder mittels UV-Strahlung.

Der Einsatz dieser flüssigen Klebstoffe bringt allerdings auch eine Reihe von unerwünschten Effekten mit sich. So können niedermolekulare Bestandteile (VOCs - volatile organic compounds) die empfindlichen elektronischen Strukturen der Anordnung schädigen und die Produktion erschweren. Der Klebstoff muss darüber hinaus aufwändig auf jeden einzelnen Bestandteil der Anordnung aufgebracht werden. Die Anschaffung von teuren Dispensern und Fixiereinrichtungen ist notwendig, um eine genaue Positionierung zu gewährleisten. Die Art der Auftragung verhindert zudem einen schnellen kontinuierlichen Prozess. Im anschließend erforderlichen Laminationsschritt kann aufgrund der geringen Viskosität das Erreichen einer definierten Schichtdicke und Verklebungsbreite erschwert sein.

Eine Alternative ist der Einsatz von Haft- oder Heißschmelzklebern zur Versiegelung von optoelektronischen Aufbauten. Unter den Haftklebemassen werden dabei bevorzugt solche eingesetzt, die nach der Verklebung durch eingebrachte Energie (zum Beispiel aktinische Strahlung oder Wärme) vernetzbar sind. Derartige Massen werden beispielsweise in US 2006/0100299 A1 und WO 2007/087281 A1 beschrieben. Ihr Vorteil liegt insbesondere darin, dass durch die Vernetzung die Barrierewirkung der Klebemassen verbessert werden kann.

Ebenso ist die Verwendung von Heißschmelzklebemassen im Stand der Technik bekannt. Vielfach werden hier Copolymere des Ethylens eingesetzt, zum Beispiel Ethylen-Ethylacetat (EEA), Ethylen-Acrylsäure-Copolymer (EAA), Ethylen-Butylacrylat (EBA) oder Ethylen-Methylacrylat (EMA). Insbesondere für auf Siliziumwafern basierende Solarzellenmodule werden in der Regel vernetzende Ethylen-Vinylacetat-(EVA)-Copolymere eingesetzt. Die Vernetzung findet während des Versiegelungsprozesses unter Druck und bei Temperaturen oberhalb von etwa 120 C statt. Dieser Prozess ist für viele auf organischen Halbleitern basierende oder in Dünnschichtverfahren hergestellte optoelektronische Aufbauten aufgrund der hohen Temperaturen und der mechanischen Belastung durch den Druck nachteilig.

Heißschmelzklebemassen auf der Basis von Blockcopolymeren oder funktionalisierten Polymeren sind beispielsweise in WO 2008/036707 A2, WO 2003/002684 A1, JP 2005-298703 A und US 2004/0216778 A1 beschrieben. Ein Vorteil dieser Klebemassen ist, dass durch die Klebstoffe selbst keine oder nur sehr wenig Substanz in den zu verkapselnden Aufbau eingebracht wird, die den Aufbau selbst schädigt, wohingegen dieses Problem vor allem bei reaktiven Flüssigklebersystemen, insbesondere solchen auf Acrylat- oder Epoxidharzbasis, relevant ist. Aufgrund der hohen Anzahl reaktiver Gruppen weisen diese Systeme eine relativ hohe Polarität auf, so dass insbesondere Wasser darin enthalten ist. Die Menge liegt in der Regel im Bereich von weniger als 100 ppm bis hin zu mehr als 1 %. Unter anderem auch aus diesem Grund werden solche Flüssigkleber - wie schon vorstehend erwähnt - vornehmlich als Randversiegelung der elektronischen Anordnungen eingesetzt, wobei sie nicht in direktem Kontakt mit den aktiven elektronischen Materialien stehen.

Eine weitere Möglichkeit, der Problematik eingeschleppter Permeate zu begegnen, besteht darin, zusätzlich noch ein absorbierendes Material - einen sogenannten Getter - innerhalb der Verkapselung einzuschließen, welches aus dem Klebstoff herausdiffundierendes oder hindurchpermeierendes Wasser oder andere Permeate bindet, indem es sie zum Beispiel absorbiert oder adsorbiert. Ein solches Vorgehen ist unter anderem in EP1407818 A1, US 2003/0057574 A1 und in US 2004-0169174 A1 beschrieben.

Eine weitere Maßnahme ist die Ausstattung des Klebstoffs und/oder des Substrats und/oder der Abdeckung des elektronischen Aufbaus mit solchen bindenden Eigenschaften, wie es zum Beispiel in WO 2006/036393 A2, DE10 2009 036 970 A1 und DE 10 2009 036 968 A1 beschrieben wird.

Ferner ist es möglich, besonders permeatarme Rohstoffe einzusetzen oder den Klebstoff bei der Herstellung oder vor der Applikation von permeierenden Substanzen zu befreien, zum Beispiel durch thermische Trocknung, Vakuumtrocknung, Gefriertrocknung oder das Einmischen von Gettern. Nachteilig an derartigen Verfahren sind die lange Trockendauer und die gegebenenfalls hohen oder niedrigen Trocknungstemperaturen, die den Klebstoff schädigen oder chemische Reaktionen, wie zum Beispiel eine Vernetzung, auslösen können. Auch ist der Prozess des Einmischens und späteren Abtrennens der Getter aufwändig.

Werden solche kleberseitigen Maßnahmen zur Verminderung des Eintrags von schädlichen permeierenden Substanzen in den zu schützenden Aufbau getroffen, so ist es notwendig, die hergestellten Eigenschaften bis zur Verwendung des Klebstoffs möglichst uneingeschränkt zu erhalten. So ist es zum Beispiel notwendig, einen besonders wasserfrei hergestellten Klebstoff vor der Wasseraufnahme aus der Umgebung zu schützen. Auch müssen eventuell in der Klebemasse enthaltene Gettersubstanzen vor der verfrühten Sättigung durch Aufnahme von Permeaten aus der Umgebung geschützt werden.

Diese Aufgabe wird in der Regel durch eine permeationsdichte oder zumindest - hemmende Verpackung der Klebstoffe gelöst. Flüssigklebstoffe werden in der Regel in entsprechende Behälter, zum Beispiel aus Metall, abgefüllt. Klebebänder werden oft in flexible Beutel aus permeationshemmendem Material - zum Beispiel aus Polyethylenfolie oder einem Folienlaminat aus Aluminium und Polyester - eingeschweißt. Auch die Verpackungsmaterialien selbst müssen dabei möglichst frei von Permeaten sein, die zur Füllgutseite hin freigesetzt werden könnten.

Um Schwächen in der Dichtheit der Verpackung entgegenzuwirken oder eingeschlossene Permeate schnell zu binden, wird oft auch ein Getter mit verpackt, zum Beispiel in Gestalt eines mit Silicagel oder Zeolith gefüllten Beutels. Dieser Getter ist in der Regel nicht in direktem Kontakt mit dem Füllgut. Nachteilig ist bei diesem Verfahren insbesondere der erhöhte Verpackungsaufwand.

Ein spezifisches Problem tritt bei der Verpackung von flächigen Klebstoffen, also Klebebändern oder Klebefolien, auf: Werden diese als Zuschnitte gestapelt oder zur Rolle aufgewickelt, wird dabei Gas - beispielsweise Luft - eingeschlossen, das sich nicht im Austausch mit dem weiteren in der Verpackung verbleibenden Gasraum befindet. Enthaltene unerwünschte Permeate, zum Beispiel Wasserdampf, gelangen also nicht zum in der Verpackung befindlichen Gettermaterial und können somit in die Klebemasse übertreten. Darüber hinaus enthalten solche Klebebänder in der Regel ein temporäres Abdeckmaterial, den sogenannten Liner, sowie oft auch ein Trägermaterial. Diese können ebenfalls unerwünschte Permeate enthalten, die insbesondere aufgrund der großen Kontaktfläche mit dem Klebstoff leicht in diesen permeieren können. In die Verpackung eingebrachte Getterbeutel oder -pads können diese Permeate nicht zuverlässig abfangen und binden. Eine vollständige Befreiung der Liner- und Trägermaterialien von den unerwünschten Permeaten, zum Beispiel durch Trocknung, ist langwierig und aufwändig.

Aus EP 2 078 608 A1 ist es bekannt, Linermaterialien zu verwenden, die eine spezielle Permeationsbarriere enthalten. Dieses Konzept ist jedoch nicht wirksam gegen im Liner enthaltene oder zwischen Liner und Klebemasse eingeschlossene Permeate.

Es besteht somit ein anhaltender Bedarf an Linern, die eine flächige Klebemasse zuverlässig vor dem Einfluss von Permeaten schützen.

Aufgabe der vorliegenden Erfindung ist es daher, einen Liner zur Verfügung zu stellen, der eine Klebemasse sowohl vor aus der Umgebung stammenden Permeaten als auch vor beim Aufwickeln oder Stapeln und sonstigen Verarbeitungsschritten eingeschlossenen Permeaten schützt. Dementsprechend soll bei einem Produkt, beispielsweise einem Klebeband, das eine weitgehend permeatfreie Klebeschicht enthält, diese Klebeschicht für die Zeit der Lagerung und des Transports weiter weitgehend frei von Permeaten gehalten werden, wobei die Klebeschicht günstigenfalls sogar noch von verbliebenen Permeaten befreit wird.

WO 2009/059299 A1 offenbart einen Releaseliner mit einem Papierträger der mit einer siliconbasierten Trennschicht beschichtet ist. Auf der gegenüberliegenden Seite des Trägers befindet sich eine Schicht, die Metallsalze, wie z. B. Claciumcarbonat, Eisenoxid, Zinkoxid etc. beinhaltet. Das Trennpaper wird zum Schutz einer Klebemassenschicht verwendet.

WO 2008/072115 A1 offenbart einen Releaseliner mit einer Trägerschicht aus Papier, Plastikfilm oder einem Gewebe, wobei eine erste Seite des Trägers mit einer Trennschicht versehen wurde und auf der gegenüberliegende Seite eine Schicht aufgebracht wurde, die anorganische Oxidpartikel oder Aktivkohle enthält

US 4 502 903 A offenbart ein Laminat bestehend aus einer Trägerschicht aus einem EthylenVinylacetat-Copolymeren. Auf eine Seite der Trägerschicht wird eine dünne Schicht elementaren Lithiums aufextrudiert.

WO 00/34035 A1 offenbart einen Releaseliner mit einer Trennschicht und einer Metallschicht aus z. B. Aluminium, Eisen Zinn oder einer Legierung dieser Metalle. Zusätzlich kann noch eine Kunststoff- oder Papierträgerschicht vorhanden sein.

Die Lösung der Aufgabe beruht auf dem Grundgedanken der vorliegenden Erfindung, einen Liner mit darin enthaltenen Gettermaterialien zur Verfügung zu stellen.

Ein erster Gegenstand der Erfindung ist daher ein Liner zum Schutz von Klebemassen, der mindestens eine abhäsive Trennschicht und mindestens eine Schicht eines zur Sorption mindestens von Wasser befähigten Gettermaterials enthält, wobei das Gettermaterial ausgewählt ist aus Lithium, Beryllium, Bor, Natrium, Magnesium, Silizium, Kalium, Calcium, Mangan, Eisen, Nickel, Zink, Gallium, Germanium, Cadmium, Indium, Cäsium, Barium, Boroxid, Calciumoxid, Chromoxid, Manganoxid, Eisenoxid, Kupferoxid, Silberoxid, Indiumoxid, Bariumoxid, Bleioxid, Phosphoroxid, Natriumhydroxid, Kaliumhydroxid, Metallsalzen, Metallhydriden, Anhydriden von einfachen und mehrfachen Carbonsäuren, Natriumdithionit, Carbohydrazid, Ascorbaten, Gallussäure, Zeolithen, Kohlenstoffnanoröhrchen, und Carbodiimiden sowie Mischungen von zwei oder mehreren der vorstehenden Substanzer und mindestens eine Trägerschicht.

Ein derartiger Liner verhindert vorteilhaft das Eindringen von Permeaten aus der Umgebung in die zu schützende Klebemasse und ist in der Lage, auch in der Klebemasse enthaltene und zwischen Liner und Klebemasse eingeschlossene Permeate zu binden. Die Klebemasse selbst beziehungsweise ein die Klebemasse enthaltendes Produkt muss somit nicht gesondert vorbehandelt - beispielsweise getrocknet - werden.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (zum Beispiel Etiketten) eingesetzt.

Unter einem Liner wird demgemäß ein eine antihaftende (abhäsive) Oberfläche aufweisendes Abdeckmaterial verstanden, das zum temporären Schutz einer Klebemasse direkt auf die Masse aufgebracht wird und in der Regel unmittelbar vor Applikation der Klebemasse durch einfaches Abziehen entfernt werden kann.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner ist nicht Bestandteil eines Klebebandes, sondern nur ein Hilfsmittel zu dessen Herstellung, Lagerung oder für die Weiterverarbeitung. Darüber hinaus ist ein Liner im Gegensatz zu einem Klebebandträger nicht fest mit einer Klebstoffschicht verbunden, sondern der Verbund ist nur temporär und nicht dauerhaft.

Ein erfindungsgemäßer Liner enthält mindestens eine abhäsive Trennschicht. Der Begriff "abhäsiv" drückt erfindungsgemäß aus, dass die Trennschicht eine geringere Adhäsion zu der abzudeckenden Klebemasse aufweist als die Klebemasse zum in ihrer Anwendung vorgesehen Applikationsuntergrund und gegebenenfalls zu dem zur Klebemasse gehörenden Trägermaterial.

Das Material der abhäsiven Trennschicht ist bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe. Besonders bevorzugt ist das Material der abhäsiven Trennschicht ausgewählt aus Silikonen und Polyolefinen.

Das die abhäsive Trennschicht bildende System ist vorzugsweise so eingestellt, dass eine Diffusion von abhäsiven Substanzen in die Klebemasse quasi ausbleibt. Analytisch lassen sich gegebenenfalls noch Substanzen aus der abhäsiven Beschichtung nachweisen, welche jedoch auf mechanischen Abrieb zurückzuführen sind.

Bevorzugt weist die abhäsive Trennschicht quasi keinen Dampfdruck bei Raumtemperatur auf.

Bevorzugt besteht die abhäsive Trennschicht aus einem Silikon-System. Zur Herstellung solcher Silikon-Systeme werden bevorzugt vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Silikonbasierende Trennmittel auf additionsvernetzender Basis lassen sich durch Hydrosilylierung härten. Diese Trennmittel umfassen üblicherweise die folgenden Bestandteile:
- ein alkenyliertes Polydiorganosiloxan (insbesondere lineare Polymere mit endständigen Alkenylgruppen),
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungs-Katalysatoren) haben sich beispielsweise Platin oder Platinverbindungen, wie zum Beispiel der Karstedt-Katalysator (eine Pt(0)-Komplexverbindung) durchgesetzt.

Thermisch härtende Trennbeschichtungen sind somit häufig Mehrkomponentensysteme, welche typischerweise aus folgenden Komponenten bestehen:
a) einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive^{®} 921 oder 610, beide kommerziell erhältlich bei der Wacker-Chemie GmbH;
b) einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;
c) einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRAO 17 oder CRAO 42, kommerziell erhältlich bei der Wacker-Chemie GmbH;
d) einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierten Siloxanen verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Silikonhaltige Systeme lassen sich, beispielsweise bei Dow Corning, Wacker oder Rohm&Haas, kommerziell erwerben.

Beispielhaft sei "Dehesive^{®} 914" genannt, das ein Vinylpolydimethylsiloxan, den Vernetzer "Crosslinker V24", ein Methylhydrogenpolysiloxan und den Katalysator "Catalyst Ol", einen Platin-Katalysator in Polydimethylsiloxan, enthält. Dieses System ist bei der Wacker-Chemie GmbH erhältlich.

Verwendbar ist des Weiteren zum Beispiel das auf dem Markt erhältliche additionsvernetzende Silikon-Release-System "Dehesive^{®} 940A" der Wacker-Chemie mit einem zugehörigen Katalysatorsystem, das im unvernetzten Zustand aufgetragen wird und dann nachträglich im aufgetragenen Zustand vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet. Daher wird bei der Herstellung von antiadhäsiven Silikonbeschichtungen die Anwesenheit von Kontaktgiften, insbesondere von Platingiften, streng vermieden. Vorzugsweise ist daher das im erfindungsgemäßen Liner enthaltene Gettermaterial kein Platingift.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebemassen eingesetzt werden.

Polyolefinische Trennschichten können sowohl aus thermoplastischen, nicht elastischen als auch aus elastischen Materialien bestehen. Zum Beispiel können derartige Trennschichten auf Polyethylen basieren. Dafür sind Polyethylene im gesamten realisierbaren Dichtebereich von circa 0,86 g/cm³ bis 1 g/cm³ nutzbar. Für bestimmte Anwendungen bieten sich Polyethylene niederer Dichte bevorzugt an, da sie häufig niedrigere Trennkräfte bewirken.

Trennschichten mit elastischen Eigenschaften können gleichfalls aus olefinhaltigen Elastomeren bestehen. Beispiele umfassen sowohl statistische Copolymere als auch Blockcopolymere. Von den Blockcopolymeren seien beispielhaft Ethylen-Propylen-Kautschuke, Butylkautschuk, Polyisobutylen, Ethylen-Blockcopolymere sowie teilweise und vollständig hydrierte Styrol-Dien-Blockcopolymere wie zum Beispiel Styrol-Ethylen/Butylen- und Styrol-Ethylen/Propylen-Blockcopolymere genannt.

Geeignete Trennschichten können ferner auch durch Acrylatcopolymere gestellt werden. Bevorzugte Ausführungsformen dieser Variante sind Acrylatpolymere mit einer statischen Glastemperatur (mid-point-TG ermittelt über Differentialcalorimetrie) unterhalb Raumtemperatur. Die Polymere sind typischerweise vernetzt. Die Vernetzung kann dabei chemischer oder physikalischer Natur, wie sie beispielsweise in Blockcopolymeren realisiert ist, sein.

Die mindestens eine abhäsive Trennschicht des erfindungsgemäßen Liners weist vorzugsweise eine Schichtdicke von 0,5 µm bis 300 µm auf. Dieser Bereich umfasst sowohl dünne Beschichtungen aus dem Trennschichtmaterial (zum Beispiel Silikon) wie auch trägerlose Liner, die komplett aus dem Trennschichtmaterial hergestellt sind (zum Beispiel eine Folie aus einem geeigneten Polyolefin).

Die abhäsive Trennschicht kann direkt mittels eines Streichbalkens aus der Lösung, Emulsion oder Dispersion aufgebracht werden. Das verwendete Löse-, Emulsionsbeziehungsweise Dispergiermittel kann in diesem Fall anschließend in einem handelsüblichen Trockner verdampft werden. Ebenso ist eine lösungsmittelfreie Beschichtung mittels einer Düsen- oder Walzenbeschichtungsanlage geeignet.

Die abhäsive Schicht kann erfindungsgemäß auch gedruckt werden. Hierzu eignen sich nach dem Stand der Technik Tief- und Siebdruckverfahren. Bevorzugt werden hier rotative Druckverfahren angewendet. Ferner können abhäsive Beschichtungen auch durch Aufsprühen aufgebracht werden. Dies kann im rotativen Sprühverfahren geschehen, gegebenenfalls auch elektrostatisch.

Das Material der abhäsiven Trennschicht und das Material einer optional vorhandenen Trägerschicht müssen nicht als homogene Materialien vorliegen, sondern können auch aus Mischungen mehrerer Materialien bestehen. So können die Materialien jeweils zur Optimierung der Eigenschaften und/oder Verarbeitung mit einem oder mehreren Additiven wie Harzen, Wachsen, Weichmachern, Füllstoffen, Pigmenten, UV-Absorbern, Lichtschutzmitteln, Alterungsschutzmitteln, Vernetzungsmitteln, Vernetzungspromotoren, Entschäumern, Entgasungsmitteln, Benetzungsmitteln, Dispergierhilfsmitteln, Rheologieadditiven oder Elastomeren abgemischt sein.

Im einfachsten Fall besteht der erfindungsgemäße Liner nur aus der abhäsiven Trennschicht, einer Schicht eines zur Sorption mindestens einer permeationsfähigen Substanz befähigten Gettermaterials (im Folgenden auch als "Gettermaterial-Schicht" oder als "Getterschicht" bezeichnet) und mindestens einer Trägerschicht. Die abhäsive Trennschicht kann direkt auf die Trägerschicht oder auf die Gettermaterial-Schicht aufgebacht sein und diese zumindest partiell überdecken. Die Gettermaterial-Schicht kann somit zwischen Trägermaterial und Trennschicht angeordnet sein und/oder auf der Seite, die der mit einer Trennschicht beschichteten Seite des Trägermaterials gegenüberliegt. Üblicherweise ist eine abhäsive Trennschicht als durchgängige (nicht unterbrochene) äußerste Schicht zumindest auf die der Klebemasse zugewandte Seite des Trägermaterials aufgebracht.

Der erfindungsgemäße Liner kann auch beidseitig zumindest partiell eine abhäsive Oberfläche aufweisen, die gleich oder verschieden sein kann.

Als Trägermaterial des Liners können Papiere, kunststoffbeschichtete Papiere oder Folien eingesetzt werden, wobei Folien, insbesondere dimensionsstabile Kunststoff- oder Metallfolien, bevorzugt werden. Die mindestens eine Trägerschicht besteht daher bevorzugt aus Polyestern, insbesondere aus Polyethylenterephthalat, zum Beispiel aus biaxial verstrecktem Polyethylenterephthalat, oder aus Polyolefinen, insbesondere aus Polybuten, Cyclo-Olefin-Copolymer, Polymethylpenten, Polypropylen oder Polyethylen, zum Beispiel aus monoaxial verstrecktem Polypropylen, biaxial verstrecktem Polypropylen oder biaxial verstrecktem Polyethylen. Polyesterfolien weisen den Vorteil auf, dass sie gute Barriereeigenschaften haben, für Temperaturstabilität sorgen und eine erhöhte mechanische Stabilität einbringen. Ganz besonders bevorzugt besteht daher die mindestens eine Trägerschicht des erfindungsgemäßen Liners aus einer Polyesterfolie, beispielsweise aus biaxial verstrecktem Polyethylenterephthalat.

Auch Papiere oder Vliese sind als Trägermaterial geeignet.

In einer bevorzugten Ausführungsform enthält der erfindungsgemäße Liner eine Barriereschicht gegen ein oder mehrere spezifische(s) Permeat(e), insbesondere gegen Wasserdampf und Sauerstoff. Es ist erfindungsgemäß ebenfalls bevorzugt, wenn der Liner mindestens eine Trägerschicht enthält und diese Trägerschicht eine Barrierefunktion gegen ein oder mehrere spezifische(s) Permeat(e) aufweist. Eine derartige Barrierefunktion kann aus organischen oder anorganischen Materialien bestehen. Trägermaterialien mit Barrierrefunktion sind in EP 2 078 608 A1 ausführlich dargestellt.

Besonders bevorzugt enthält der erfindungsgemäße Liner mindestens eine anorganische Barriereschicht. Als anorganische Barriereschichten eignen sich besonders gut im Vakuum (zum Beispiel mittels Verdampfen, CVD, PVD, PECVD, ALD (Atomic Layer Deposition)) oder unter Atmosphärendruck (zum Beispiel mittels Atmosphärenplasma, reaktiver Coronaentladung oder Flammenpyrolyse) abgeschiedene Metallnitride oder -hydronitride, beispielsweise Nitride des Siliziums, des Bors, des Aluminiums, des Zirkoniums, des Hafniums oder des Tellurs; ferner Oxide des Siliziums, des Bors, des Aluminiums, des Zirkoniums, des Hafniums und des Tellurs sowie Indium-Zinn-Oxid (ITO). Ebenfalls geeignet sind mit weiteren Elementen dotierte Schichten der vorstehend genannten Varianten.

Besonders bevorzugt enthält der erfindungsgemäße Liner mindestens eine Barriereschicht gegen ein oder mehrere spezifische Permeate, wobei die Barriereschicht und die Trägerschicht als unmittelbar aufeinander folgende Schichten vorliegen. Als besonders geeignetes Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der Trägerschicht verwirklichen lassen. Bevorzugt wird eine Permeationsbarriere der Trägerschicht mit Barrierefunktion beziehungsweise des Verbundes aus Trägerschicht und Barriereschicht gegen Wasserdampf (WVTR) von < 1 g/(m²*d) und/oder gegen Sauerstoff (OTR) von < 1 cm³/(m²*d*bar), wobei der Wert auf die jeweils im Liner verwendete Dicke der Trägerschicht bezogen ist, also nicht auf eine spezifische Dicke normiert ist. Die WVTR wird dabei bei 38°C und 90% relativer Luftfeuchtigkeit nach ASTM F-1249 und die OTR bei 23°C und 50% relativer Luftfeuchtigkeit nach DIN 53380-Teil 3 gemessen.

Der erfindungsgemäße Liner enthält ferner mindestens eine Schicht eines zur Sorption mindestens einer permeationsfähigen Substanz befähigten Gettermaterials.

Unter "Sorption" wird der Vorgang der selektiven Aufnahme eines Stoffes oder mehrerer Stoffe durch einen anderen Stoff - erfindungsgemäß durch das Gettermaterial - verstanden. Die Sorption der permeationsfähigen Substanz(en) durch das Gettermaterial kann dabei beispielsweise durch Absorption oder Adsorption erfolgen, wobei Adsorption sowohl in Form von Chemisorption als auch von Physisorption auftreten kann.

Unter einer "permeationsfähigen Substanz" wird eine Substanz verstanden, die als gasförmiger oder flüssiger, gegebenenfalls auch als fester Stoff, in die zu schützende Klebemasse eindringen und diese nachfolgend durchdringen kann. Derartige Substanzen werden nachstehend - wie im vorliegenden Text schon mehrfach geschehen - als "Permeate" bezeichnet. Die Permeate können aus der Klebemasse selbst oder aus der Umgebung, beispielsweise auch aus dem Trägermaterial eines mit der Klebemasse beschichteten Klebebandes stammen. Aus der Klebemasse beziehungsweise aus dem Klebeband selbst kommen häufig niedermolekulare organische Verbindungen wie Lösemittelreste, Restmonomere, Öle, Harzkomponenten, Weichmacher sowie Wasser. Aus der Umgebung stammen oft Wasser, flüchtige organische Verbindungen (VOCs), niedermolekulare Kohlenwasserstoffe und Sauerstoff. Als "permeationsfähige Substanzen" werden insbesondere die folgenden Substanzen angesehen:

Acetonitril, 1-Butanol, Chlorbenzol, Chloroform (Trichlormethan), Cyclohexan, Diethylether, 1,4-Dioxan, Eisessig (Essigsäure), Essigsäureanhydrid, Essigsäureethylester (Ethylacetat, Essigester), Essigsäure-n Butylester (n-Butyl Acetat), Essigsäure-tert. butylester (t-Butyl Acetat), Ethanol, Methanol, n-Hexan, n-Heptan, 3-Hexanon, 2-Propanol (Isopropanol), 3-Methyl-1-butanol (Isoamylalkohol), Methylenchlorid (Dichlormethan), Methylethylketon (Butanon), Methylisobutylketon, Nitromethan (Nitrocarbol), n-Pentan, 2-Pentanon, 3-Pentanon, Petrolether (Leichtbenzin), Benzin, Propanol, Pyridin (Azin), tert-Butylmethylether, Tetrachlorethen (Perchlorethen), Tetrahydrofuran, Toluol, Trichlorethan, Triethylamin, Xylol, Sauerstoff, Methan, Ethan, Propan, Propen, Butan, Buten, Kohlenstoffdioxid, Ozon, Schwefeldioxid, Wasser.

Unter einem "Gettermaterial" wird ein Material verstanden, das - im Sinne des vorstehend als "Sorption" definierten Vorgangs - mindestens eine permeationsfähige Substanz selektiv aufnehmen kann. Das Gettermaterial ließe sich daher auch als "Sorbens" oder als "Sorptionsmittel" bezeichnen. Erfindungsgemäß ist das Gettermaterial mindestens zur Sorption von Wasser befähigt.

Die Gettermaterialschicht ist vorzugsweise als zusammenhängende, durchgehende und ununterbrochene Schicht ausgebildet. Sie kann jedoch auch als unterbrochene Schicht vorliegen oder auch Löcher aufweisen. Erfindungsgemäß ist es möglich, eine vollflächige oder durchbrochene Schicht pulverförmigen Gettermaterials auf ein Trägermaterial aufzubringen und, zum Beispiel durch einen thermischen und/oder mechanischen Prozess wie zum Beispiel Heißwalzen, mit der nachfolgend aufgebrachten Trennschicht auf dem Trägermaterial zu binden. Eine durchbrochene Schicht hat den Vorteil, dass zugelassene Permeate die Schicht leichter passieren können, zu bindende Permeate aber abgefangen werden. Weiterhin weist eine zum Beispiel aus Partikeln bestehende durchbrochene Schicht eine höhere Oberfläche auf als eine vollflächige, glatte Schicht, so dass die Sorptionsfähigkeit des Gettermaterials noch besser zum Tragen kommt.

Die Dicke der Gettermaterial-Schicht hängt insbesondere von der gewünschten Aufnahmekapazität für den jeweiligen Permeaten ab. Als Untergrenze ist die minimale Dicke einer durchgängigen Schicht eines hoch aufnahmefähigen Gettermaterials, zum Beispiel einer Calziumschicht, anzusehen, welche mit etwa 20 nm beziffert werden kann. Als Obergrenze ist die Dicke einer aus metallischem Gettermaterial, beispielsweise aus einer Barium-Zink-Legierung, bestehenden Folie anzusehen, welche in ihrer Steifigkeit das Aufwickeln eines Klebebands noch erlaubt. Eine derartige Schichtdicke kann mit etwa 100 µm beziffert werden.

Die Gettermaterial-Schicht ist bevorzugt aus dem reinen Gettermaterial ausgeführt. Beispielsweise handelt es sich dabei um eine aufgedampfte oder gesputterte Schicht eines Gettermaterials. In einer weiteren Ausführungsform liegt mindestens ein weiteres Material in der Getterschicht dispergiert vor. Beispielsweise ist dieses weitere Material ein Gas, so dass die Getterschicht besonders vorteilhaft als Schaum, insbesondere als offenzelliger Schaum, vorliegt. Dies hat den Vorteil einer besonders großen aktiven Oberfläche der Getterschicht. Verfahren zur Herstellung von Metallschäumen sind beispielsweise aus DE 10 2009 020 004 A1 bekannt. Auch Materialien in festem oder flüssigem Zustand können in der Gettermaterialschicht dispergiert vorliegen. Dies können zum Beispiel Materialien sein, die ein sich unter Permeataufnahme verflüssigendes Gettermaterial, beispielsweise Lithiumchlorid, oder freiwerdende Gase, beispielsweise Wasserstoff bei der Reaktion von Barium mit Wasser, binden. Auch Porenbildner, die nach der Ausbildung der Gettermaterialschicht wieder entfernt werden, können das in der Getterschicht dispergierte Material bilden. Dies können zum Beispiel organische Materialien sein, die bei einer elektrochemischen Abscheidung einer Gettermaterialschicht zunächst eingebaut werden, in einem nachfolgenden Schritt aber wieder herausgelöst werden, und so eine poröse Gettermaterialstruktur hinterlassen.

Ein Gettermaterial, das dispergiert (als dispergierte Phase) in einer Schicht des Liners vorliegt, stellt keine "Schicht eines zur Sorption mindestens einer permeationsfähigen Substanz befähigten Gettermaterials" im Sinne der Erfindung dar. Eine erfindungsgemäße "Schicht eines zur Sorption mindestens einer permeationsfähigen Substanz befähigten Gettermaterials" liegt nur dann vor, wenn die Schicht im Wesentlichen von dem Gettermaterial selbst gebildet wird, beispielsweise als ausschließliches Material der Schicht oder als kontinuierliche Phase einer Dispersion. Als kontinuierliche Phase einer Dispersion gelten im Sinne der Erfindung auch perkolierte Partikel. Unter "perkolierten Partikeln" werden Partikel verstanden, die miteinander derart in Wechselwirkung stehen, dass sie zusammenhängende Gebiete beziehungsweise Cluster bilden. Da das Vorliegen einer Perkolation nicht unmittelbar zu erfassen ist, wird hilfsweise ein Gewichtsanteil des Gettermaterials von 50 % innerhalb einer Dispersion als Perkolationsschwelle definiert.

Erfindungsgemäß ist das Gettermaterial ausgewählt aus Lithium, Beryllium, Bor, Natrium, Magnesium, Silizium, Kalium, Calcium, Mangan, Eisen, Nickel, Zink, Gallium, Germanium, Cadmium, Indium, Cäsium, Barium, Boroxid, Calciumoxid, Chromoxid, Manganoxid, Eisenoxid, Kupferoxid, Silberoxid, Indiumoxid, Bariumoxid, Bleioxid, Phosphoroxid, Natriumhydroxid, Kaliumhydroxid, Metallsalzen, Metallhydriden, Anhydriden von einfachen und mehrfachen Carbonsäuren, Carbohydrazid, Ascorbaten, Gallussäure, Zeolithen, Kohlenstoffnanoröhrchen und Carbodiimiden sowie Mischungen von zwei oder mehreren der vorstehenden Substanzen.

Die Metallsalze sind bevorzugt ausgewählt aus Calciumchlorid, Calciumbromid, Lithiumchlorid, Lithiumbromid, Zinkchlorid, Zinkbromid, Calciumsulfat, Kupfersulfat, Natriumdithionit, Natriumcarbonat, Natriumsulfat, Kaliumcarbonat, Magnesiumcarbonat, Magnesiumchlorid, Kaliumsulfit, Magnesiumperchlorat, Bariumperchlorat, Aluminiumsulfat, Bariumsulfat, Magnesiumsulfat, Lithiumsulfat, Cobaltsulfat,

Die Metallhydride sind bevorzugt ausgewählt aus Calciumhydrid, Natriumhydrid und Lithiumaluminiumhydrid.

Anhydride von einfachen und mehrfachen Carbonsäuren sind bevorzugt ausgewählt aus Essigsäureanhydrid, Propionsäureanhydrid, Buttersäureanhydrid und Methyltetrahydrophthalsäureanhydrid.

Die Gettermaterialien werden ihrer Funktion entsprechend bevorzugt als von Permeaten freie Materialien eingesetzt, zum Beispiel wasserfrei. Es ist erfindungsgemäß jedoch auch möglich, bereits teilweise mit Permeaten komplexierte Materialien wie beispielsweise CaSO₄*1/2H₂O (Calciumsulfat-Halbhydrat) zu verwenden.

Unter "Carbodiimiden" werden Verbindungen der allgemeinen Formel R¹-N₌C₌N-R² verstanden, wobei R¹ und R² organische Reste, insbesondere Alkyl- oder Arylreste sind, die gleich oder verschieden sein können.

Bevorzugt ist das Gettermaterial ausgewählt aus Magnesium, Calcium, Mangan, Nickel, Zink, Barium, Bariumoxid, Bortrioxid, Calciumchlorid, Calciumoxid, Calciumsulfat, Kupfersulfat, Lithiumchlorid, Lithiumbromid, Magnesiumchlorid, Magnesiumperchlorat, Magnesiumsulfat, Phosphoroxid, Kaliumcarbonat, Kaliumhydroxid, Natrium, Natriumhydroxid, Natriumsulfat, Zinkchlorid, Carbodiimiden und Zeolithen sowie Mischungen von zwei oder mehreren der vorstehenden Substanzen. Diese Materialien weisen eine hohe Sorptionskapazität gegenüber mindestens einem der oben genannten Permeate und insbesondere gegenüber Wasser auf.

Besonders bevorzugt ist das Gettermaterial ausgewählt aus Magnesium, Calcium, Barium, Calciumoxid, Chromoxid, Manganoxid, Eisenoxid, Kupferoxid, Silberoxid und Bariumoxid sowie Mischungen von zwei oder mehreren der vorstehenden Substanzen. Diese Gettermaterialien bieten den Vorteil, dass sie sich leicht schichtförmig, zum Beispiel durch Vakuumbeschichtungsverfahren, auf die betreffende Schicht des Liners abscheiden lassen und ein hohes Sorptionsvermögen zeigen.

In einer weiteren bevorzugten Ausführungsform des erfindungsgemäßen Liners ist das Gettermaterial ausgewählt aus Calciumoxid, Calciumsulfat, Calciumchlorid, Natriumsulfat, Kaliumcarbonat, Kupfersulfat, Magnesiumperchlorat, Magnesiumsulfat und Zeolithen sowie Mischungen von zwei oder mehreren der vorstehenden Substanzen. Diese Materialen zeichnen sich dadurch aus, dass sie regenerierbare Gettermaterialien sind. Darunter werden Substanzen verstanden, die aufgenommene Permeate, beispielsweise Wasser, unter bestimmten Bedingungen wieder abgeben können und dadurch in einen Zustand gelangen, der sie zu erneuter Permeataufnahme befähigt. Dies ermöglicht ein Verfahren, bei dem der Getter-haltige Liner vor dem Inkontaktbringen mit der Klebemasse von gegebenenfalls bis zu diesem Zeitpunkt aufgenommenen Permeaten weitgehend befreit wird, beispielsweise durch Trocknen. Dadurch steht vorteilhaft bei Verwendung des Liners die volle Getterkapazität zur Verfügung.

Ganz besonders bevorzugt ist das Gettermaterial ausgewählt aus Magnesium, Calcium, Barium, Calciumoxid, Calciumsulfat, Calciumchlorid und Zeolithen sowie Mischungen von zwei oder mehreren der vorstehenden Substanzen. Diese Materialien weisen besonders hohe Kapazitäten für die Aufnahme von Wasser und weiteren Permeaten auf, sind größtenteils regenerierbar und lassen sich hervorragend schichtförmig in den Liner integrieren, beispielsweise auf eine Trägerschicht oder auf die abhäsive Trennschicht beschichten.

Im Rahmen einer besonderen Ausführungsform des erfindungsgemäßen Liners ist das Gettermaterial ausgewählt aus Calcium, Barium, Lithiumchlorid und Calciumoxid sowie Mischungen von zwei oder mehreren der vorstehenden Substanzen. Diese Substanzen lassen über eine Änderung ihrer optischen Eigenschaften Rückschlüsse auf den Permeatgehalt der Klebemasse zu, indem sie beispielsweise mit zunehmender Wasseraufnahme eine Änderung von Weiß (Calciumoxid) oder einer metallischundurchsichtigen Erscheinung (Calcium, Barium) zu einem transparenten Erscheinungsbild oder im Falle von Eisen zu einer bräunlichen Verfärbung vollziehen. So lange also noch freie Getterkapazität anhand des optischen Erscheinungsbildes des Liners erkennbar ist, kann dies als Indiz dafür gelten, dass noch kein oder allenfalls wenig Permeat in die zu schützende Klebemasse diffundiert ist.

In einer weiteren bevorzugten Ausführung bindet das Gettermaterial das Permeat durch Chemisorption. Dieser Prozess läuft aufgrund der in der Regel höheren Aktivierungsenergie langsamer ab als die Physisorption. Ein bekanntes Beispiel ist hier Calciumoxid, welches durch den Permeat Wasser in Calciumhydroxid umgewandelt wird. Durch die langsamere Umsetzung ergibt sich die Möglichkeit, das Gettermaterial kurzzeitig an Umgebungsatmosphäre handzuhaben, ohne dass bereits ein wesentlicher Teil der Aufnahmekapazität verloren geht.

Weiterhin wird ein Gettermaterial bevorzugt, welches bereits bei niedriger Permeatkonzentration eine hohe Wirksamkeit besitzt. Für das Permeat Wasser werden demgemäß bevorzugt solche Gettermaterialien eingesetzt, über deren gesättigter wässriger Lösung sich bei 20 °C und einem Luftdruck von 1013 mbar eine relative Luftfeuchte von weniger als 20 % einstellt. Unter dem Aspekt der Wirksamkeit bei niedriger Permeatkonzentration ist das Gettermaterial bevorzugt ausgewählt aus der Gruppe umfassend Natriumhydroxid, Kaliumhydroxid, Lithiumbromid, Zinkbromid, Lithiumchlorid, Calciumbromid, Lithiumjodid und Calciumacetat.

In einer weiteren bevorzugten Ausführungsform weist das Material der abhäsiven Trennschicht eine Permeatendurchlässigkeit insbesondere für Wasserdampf von mindestens 100 g/(m²*d) auf, besonders bevorzugt von mindestens 500 g/(m²*d), jeweils bezogen auf eine Schichtdicke von 50 µm. Die Durchlässigkeit beziehungsweise Permeationsbarriere gegen Wasserdampf (WVTR) wird bei 38°C und 90 % relativer Luftfeuchtigkeit nach ASTM F-1249 gemessen, die Permeationsbarriere gegen Sauerstoff bei 23°C und 50 % relativer Luftfeuchtigkeit nach DIN 53380-Teil 3. Die angegebene Permeatendurchlässigkeit des Trennschichtmaterials ist insofern vorteilhaft, als der Permeat besonders schnell und effektiv zur Gettermaterialschicht gelangt, insbesondere von Seiten der Klebemasse. Besonders bevorzugt wird daher eine auf Silikon oder Arcylat basierende Trennschicht eingesetzt.

Der Gesamtgehalt des erfindungsgemäßen Liners an Gettermaterial kann von 0,5 bis 95 Gew.-%, bezogen auf das Gesamtgewicht aller Schichten des Liners, betragen. Der Gehalt hängt wesentlich von der gewünschten Aufnahmekapazität für den/die jeweiligen Permeaten ab.

Wenn zum Beispiel nur eine geringe Aufnahmekapazität erforderlich ist, reicht gegebenenfalls die Verwendung eines Gettermaterials mit geringer Aufnahmekapazität in geringer Schichtdicke aus. In einer bevorzugten Ausführungsform enthält der Liner daher 0,5 bis 5 Gew.-% Gettermaterial, bezogen auf das Gesamtgewicht des Liners. Die Dicke und die Fläche der trockenmittelhaltigen Matrix können in diesem Fall vorteilhaft an den jeweiligen Untergrenzen liegen.

Bei einer sehr hohen erforderlichen Aufnahmekapazität des Liners muss jedoch eine Gettermaterialschicht mit großer Dicke verwendet werden, wobei auch das Gettermaterial eine hohe Aufnahmekapazität besitzen sollte. Aber auch ein Gettermaterial mit geringer Aufnahmekapazität kann verwendet werden, wenn dies Kosten- oder Verträglichkeitsaspekte anraten. Im Rahmen einer weiteren bevorzugten Ausführungsform des erfindungsgemäßen Liners enthält dieser daher 60 bis 95 Gew.-% Gettermaterial, bezogen auf das Gesamtgewicht aller Schichten des Liners.

Es wird ein Gettermaterial mit hoher Aufnahmekapazität (maximal aufnehmbares Permeatgewicht > 25 % des Gettergewichts) bevorzugt, da hiermit der Gehalt an Getter gering gehalten werden kann. Die Aufnahmekapazität wird dabei nach Lagerung des Gettermaterials über 100 h bei 23 °C und 50 % relativer Luftfeuchte für das Permeat Wasserdampf oder bei 23 °C in gesättigter Atmosphäre bei anderen gasförmigen Permeaten ermittelt. Der Permeatgehalt des Getters nach Lagerung kann gravimetrisch bestimmt werden. Unter dem Aspekt der Aufnahmekapazität ist das Gettermaterial bevorzugt ausgewählt aus der Gruppe umfassend Kupfersulfat, Calciumoxid und Calciumchlorid.

In einer bevorzugten Ausführungsform besteht der erfindungsgemäße Liner aus einer Trägerschicht, einer abhäsiven Trennschicht und einer Schicht eines zur Sorption mindestens einer permeationsfähigen Substanz befähigten Gettermaterials. Der Liner enthält in diesem Fall also ausschließlich diese drei Schichten. Dies ist vorteilhaft, weil ein solcher Liner flexibler als ein mehrschichtiger Liner ist und die Verankerung zwischen den Schichten sich einfacher erzielen lässt als bei einem mehrschichtigen Liner. Darüber hinaus kann ein derartiger Liner mit einem geringeren Materialeinsatz hergestellt werden. Gegenüber einem nur eine Trennschicht enthaltenden Liner besitzt die Ausführungsform mit zusätzlicher Trägerschicht den Vorteil, dass die Trennfunktion und die mechanische Stabilisierungsfunktion in zwei Schichten entkoppelt vorliegen und somit jeweils besonders geeignete Materialien ausgewählt werden können.

In weiteren bevorzugten Ausführungsformen enthält der erfindungsgemäße Liner eine Trägerschicht, eine abhäsive Trennschicht, eine Schicht eines zur Sorption mindestens einer permeationsfähigen Substanz befähigten Gettermaterials und weitere Schichten. Dies können zum Beispiel Primerschichten sein, die die interlaminare Haftung zwischen anderen Schichten verbessern, optisch wirksame Schichten wie zum Beispiel Bedruckungen oder Strahlenfilter, oder weitere Trennschichten.

Bevorzugt ist der erfindungsgemäße Liner transparent, das heißt die Transmission gemessen nach ASTM D1003-00 (Procedure A) ist größer als 50 %, bevorzugt größer als 75 %. Mit einem transparenten Liner kann das Klebeband in der Anwendung leichter positioniert werden.

Besonders bevorzugt ist der erfindungsgemäße Liner UV-Licht-undurchlässig, das heißt die Transmission in einem Wellenlängenbereich von 200 bis 400 nm, gemessen nach ASTM D1003-00 (Procedure B), ist geringer als 25 %, bevorzugt geringer als 10 %. Mit einem UV-undurchlässigen Liner kann die Klebemasse vor Veränderungen (zum Beispiel chemische Reaktionen, Alterung, Vernetzung) durch den Einfluss von UV-Licht geschützt werden.

Ein weiterer Gegenstand der vorliegenden Erfindung ist eine Klebemasse, die zumindest einseitig und zumindest partiell mit einem erfindungsgemäßen Liner bedeckt ist. Die Klebemasse ist bevorzugt eine Haftklebemasse oder eine aktivierbare Klebemasse und insbesondere eine aktivierbare Haftklebemasse.

Als Haftklebemassen werden Klebemassen bezeichnet, deren abgebundener Film bei Raumtemperatur in trockenem Zustand permanent klebrig und klebfähig bleibt. Haftklebemassen erlauben bereits unter relativ schwachem Andruck eine dauerhafte Verbindung mit dem Haftgrund und können nach Gebrauch im Wesentlichen rückstandsfrei vom Haftgrund wieder abgelöst werden. Die Verklebbarkeit der Klebemassen beruht auf ihren adhäsiven Eigenschaften und die Wiederablösbarkeit auf ihren kohäsiven Eigenschaften.

Erfindungsgemäß können alle dem Fachmann bekannten Haftklebemassen eingesetzt werden, also beispielsweise solche auf der Basis von Acrylaten und/oder Methacrylaten, Polyurethanen, Naturkautschuken, Synthesekautschuken; Styrolblockcopolymermassen mit einem Elastomerblock aus ungesättigten oder hydrierten Polydienblöcken wie zum Beispiel Polybutadien, Polyisopren, Copolymere aus beiden sowie weitere, dem Fachmann geläufige Elastomerblöcke; Polyolefinen, Fluorpolymeren und/oder Silikonen.

Werden im Rahmen dieser Schrift Haftklebemassen auf Acrylatbasis erwähnt, so seien hiervon auch ohne explizite Erwähnung Haftklebemassen auf Basis von Methacrylaten und auf Basis von Acrylaten und Methacrylaten umfasst, sofern nicht ausdrücklich anders beschrieben. Ebenfalls im Sinne der Erfindung sind Kombinationen und Mischungen mehrerer Basispolymere sowie mit Klebharzen, Füllstoffen, Alterungsschutzmitteln und Vernetzern additivierte Klebemassen einsetzbar, wobei die Aufzählung der Additive nur beispielhaft und nicht einschränkend zu verstehen ist.

Bevorzugt werden Haftklebstoffe auf der Basis von Styrolblockcopolymeren, Polybutylenen, Polyolefinen oder Fluorpolymeren, da sich diese durch eine hohe Permeationsbarriere gegen Wasserdampf sowie einen geringen Gehalt an Wasser auszeichnen.

Als aktivierbare Klebemassen werden Klebemassensysteme angesehen, bei denen die Verklebung durch einen Energieeintrag, zum Beispiel durch aktinische Strahlung oder Wärme, erfolgt.

Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Ebenfalls umfasst sind solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von lonomeren, von thermoplastischen Polyurethanen, von Polyamiden sowie Polyestern und deren Copolymeren und auch von Blockcopolymeren wie Styrol-Blockcopolymeren als vorteilhaft herausgestellt.

Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Stryrolblockcopolymere. Derartige elastische Komponenten verleihen der hitzeaktiviert verklebenden Klebemasse infolge ihrer hohen Fließviskosität eine auch unter Druck besonders hohe Dimensionsstabilität.

Strahlungsaktivierte Klebemassen basieren ebenfalls auf reaktiven Komponenten. Letztere Bestandteile können zum Beispiel Polymere oder Reaktivharze umfassen, in denen durch die Bestrahlung ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, wie sie oben ausgeführt sind.

Bevorzugt werden aktivierbare Klebemassen auf der Basis von Epoxiden, Oxetanen, (Meth)-Acrylaten oder modifizierten Styrolblockcopolymeren, eingesetzt.

Bevorzugt weist die Klebemasse vor dem Inkontaktbringen mit dem erfindungsgemäßen Liner einen Permeatgehalt von weniger als 1000 ppm, besonders bevorzugt von weniger als 100 ppm auf. Die Angabe ppm bezieht sich dabei auf die Relation des enthaltenen Gesamtgewichts an Permeaten zum untersuchten Klebemassegewicht. Der Permeatgehalt kann mittels der Headspace-Gaschromatographie nach VDA 277 bestimmt werden oder im Fall von Wasser nach DIN EN ISO 62 (gravimetrisches Verfahren, Methode 4) oder DIN 53715 (Karl-Fischer-Titration) nach Lagerung des Prüflings über 24 Stunden bei 23°C und 50 % relativer Luftfeuchte. Bei den hier beschriebenen Permeatgehalten der Klebemasse wird die Kapazität der Gettermaterialien des Liners nicht so stark durch aus der Klebemasse diffundierende Permeate beansprucht, sondern der Liner kann seine Funktion als vor Permeaten aus der Umgebung schützende Abdeckung besser erfüllen.

Vorzugsweise hat die Klebemasse eine geringe Permeationsrate für das zu immobilisierende Permeat. Im Fall von Wasserdampf als Permeat beträgt die Wasserdampfpermeationsrate (WVTR) bevorzugt weniger als 50 g/m² day, besonders bevorzugt weniger als 20 g/m² day bezogen auf eine Klebemassedicke von 50 µm. Die WVTR wird dabei bei 38°C und 90% relativer Luftfeuchtigkeit nach ASTM F-1249, die Sauerstoffpermeationsrate (OTR) bei 23°C und 50% relativer Luftfeuchtigkeit nach DIN 53380-Teil 3 gemessen.

Durch die geringe Permeationsrate der Klebemasse diffundiert weniger Permeat aus der Umgebung durch die Klebemasse hindurch in den gettermaterialhaltigen Liner, der somit seine Funktion länger erfüllen oder mit einer geringeren Menge an Gettermaterial ausgerüstet werden kann, was den Materialeinsatz verringert und Kosten spart.

Bevorzugt ist die erfindungsgemäße Klebemasse als Klebeband ausgebildet. Das Klebeband umfasst also zumindest eine Schicht einer Haftklebemasse oder einer aktivierbaren Klebemasse oder insbesondere einer aktivierbaren Haftklebemasse. Das Klebeband kann auch weitere Schichten enthalten, zum Beispiel eine oder mehrere weitere Klebemasseschichten oder ein Trägermaterial.

Bevorzugt enthält das Klebeband nur eine Schicht einer Klebemasse (Transferklebeband), da hierdurch der Aufbau einfach gehalten und die Zahl der zu berücksichtigenden möglichen Permeate durch die geringere Materialvielfalt klein gehalten werden kann. Ferner behindert kein Trägermaterial die Diffusion von Permeaten aus dem Klebeband zum Getter-haltigen Liner, wodurch das Klebeband besonders effizient von Permeaten befreit werden kann.

Die Dicke des Klebebands kann alle üblichen Dicken umfassen, also etwa von 3 µm bis zu 3000 µm. Bevorzugt wird eine Dicke zwischen 25 und 100 µm, da in diesem Bereich Klebkraft und Handlingeigenschaften besonders positiv ausfallen. Ein weiterer bevorzugter Bereich ist eine Dicke von 3 bis 25 µm, da in diesem Bereich die Menge von durch die Klebefuge permeierenden Stoffen allein durch die kleine Querschnittsfläche der Klebefuge in einer Verkapselungsanwendung gering gehalten werden kann. Weiterhin hat sich überraschend gezeigt, dass solche geringen Klebebanddicken durch den Getter-gefüllten Liner gut von Permeaten befreit werden können.

Besonders bevorzugt werden Transferklebebänder, da hierbei kein Trägermaterial die Diffusion von Permeaten aus dem Klebeband zum Getter-haltigen Liner behindert und so das Klebeband besonders effizient von Permeaten befreit werden kann.

Ein weiterer Gegenstand der vorliegenden Erfindung ist ein Verfahren zum Schützen einer Klebemasse vor Permeaten, das das zumindest einseitige und zumindest partielle Bedecken der Klebemasse mit einem erfindungsgemäßen Liner umfasst.

Zur Herstellung eines Verbundes aus beispielsweise einem Klebeband und einem erfindungsgemäßen Liner wird der Träger des Klebebands oder der Liner einseitig mit dem bevorzugten Haftkleber des Klebebands aus Lösung oder Dispersion oder 100 %ig (zum Beispiel Schmelze) beschichtet oder bedruckt, oder der Verbund wird durch Coextrusion hergestellt. Alternativ ist eine Verbundbildung durch Transfer einer Klebemasse-Schicht bzw. eines Liners durch Kaschieren möglich. Die Klebemasseschicht(en) können durch Wärme oder energiereiche Strahlen vernetzt werden.

Bevorzugt findet dieser Prozess in einer Umgebung statt, in der das spezifische Permeat nur in geringer Konzentration oder nahezu gar nicht enthalten ist. Als Beispiel kann eine relative Luftfeuchtigkeit von weniger als 30 %, bevorzugt von weniger als 15 % genannt werden.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutzmitteln, Alterungsschutzmitteln, Vernetzungsmitteln, Vernetzungspromotoren oder Elastomeren abgemischt sein.

Die Menge der Klebstoffschicht beträgt bevorzugt 1 bis 5000 g/m², vorzugsweise 10 bis 100 g/m², wobei unter "Menge" die Menge nach einer eventuell durchgeführten Entfernung von Wasser oder Lösungsmittel verstanden wird.

Ein weiterer Gegenstand der vorliegenden Erfindung ist die Verwendung von zur Sorption mindestens einer permeationsfähigen Substanz befähigtem Gettermaterial zur Ausrüstung von Linern zum Schutz von Klebemassen.

Ein weiterer Gegenstand der vorliegenden Erfindung ist die Verwendung eines erfindungsgemäßen Liners zum zumindest einseitigen und zumindest partiellen Bedecken eines Klebebandes in Verfahren zur Verkapselung optoelektronischer Bauelemente und/oder einer aerob härtenden Klebemasse und/oder einer feuchtigkeitshärtenden Klebemasse.

Ein weiterer Gegenstand der vorliegenden Erfindung ist die Verwendung des erfindungsgemäßen Liners, der bevorzugt Calciumoxid und/oder metallisches Calcium als Gettermaterial enthält, zur Indikation des Permeatgehalts einer mit dem Liner bedeckten Klebemasse. Diese Indikation wird durch eine Änderung der optischen Eigenschaften des im Liner enthaltenen Gettermaterials erreicht. So ändert zum Beispiel Calciumoxid mit zunehmender Wasserbindung seine Farbe von weiß zu transparent. Auch metallisches Calcium verliert seine metallisch-undurchsichtige Erscheinung und wird zunehmend transparent. So lange also noch Gettermaterial in der optischen Erscheinung des unverbrauchten Zustands erkennbar ist, kann dies als Indiz dafür gelten, dass noch kein oder allenfalls wenig Permeat zur zu schützenden Klebemasse diffundiert ist.

### Figuren

### Bezeichungen:

10: Trägerschicht
11: Trennschicht
20 - 25: Schicht aus Gettermaterial

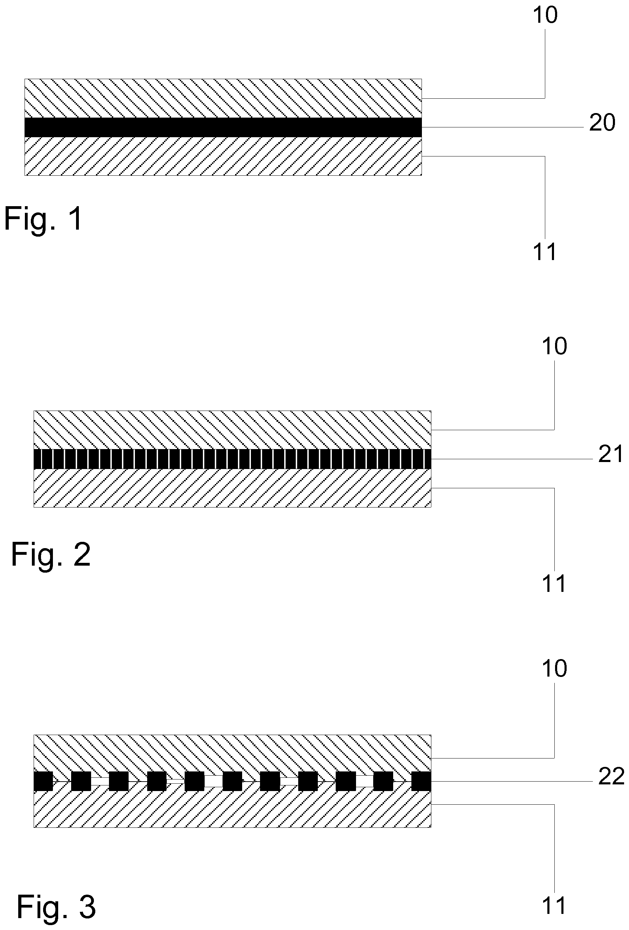

Figur 1 stellt einen erfindungsgemäßen Liner dar, bestehend aus einer Trennschicht (11) und einer Trägerschicht (10) sowie einer dazwischenliegenden durchgehenden Schicht aus Gettermaterial (20).
Figur 2 stellt einen erfindungsgemäßen Liner dar, bestehend aus einer Trennschicht (11) und einer Trägerschicht (10) sowie einer dazwischenliegenden durchbrochenen Schicht aus Gettermaterial (21).
Figur 3 stellt einen erfindungsgemäßen Liner dar, bestehend aus einer Trennschicht (11) und einer Trägerschicht (10) sowie einer dazwischenliegenden durchbrochenen Schicht aus Gettermaterial (22), bei der die Schicht aus Gettermaterial zumindest teilweise in die Oberfläche der Trennschicht und der Trägerschicht eindringt.

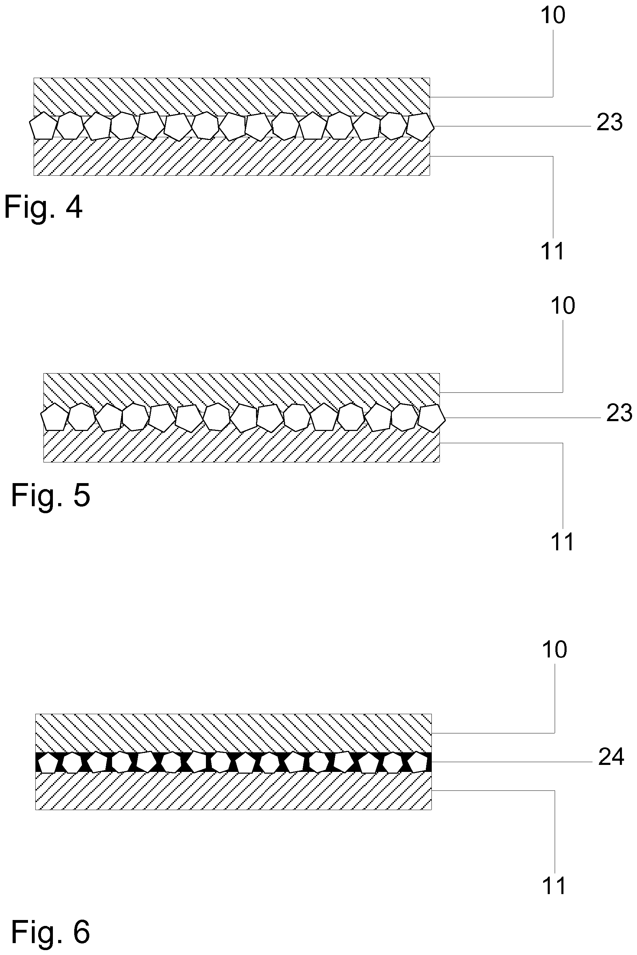

Figur 4 stellt einen erfindungsgemäßen Liner dar, bestehend aus einer Trennschicht (11) und einer Trägerschicht (10) sowie einer dazwischenliegenden Schicht aus partikulärem Gettermaterial (23).
Figur 5 stellt einen erfindungsgemäßen Liner dar, bestehend aus einer Trennschicht (11) und einer Trägerschicht (10) sowie einer dazwischenliegenden Schicht aus partikulärem Gettermaterial (23), bei der die Schicht aus Gettermaterial zumindest teilweise in die Oberfläche der Trennschicht und der Trägerschicht eindringt.
Figur 6 stellt einen erfindungsgemäßen Liner dar, bestehend aus einer Trennschicht (11) und einer Trägerschicht (10) sowie einer dazwischenliegenden Schicht aus partikulärem Gettermaterial (24), bei der das Gettermaterial in einem Matrixmaterial eingebettet vorliegt und mehr als 50 Gew.-% der Gettermaterialschicht umfasst.

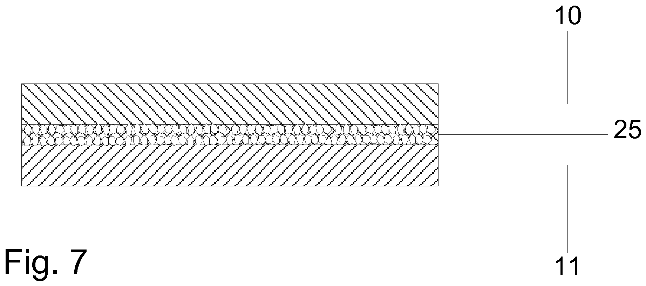

Figur 7 stellt einen erfindungsgemäßen Liner dar, bestehend aus einer Trennschicht (11) und einer Trägerschicht (10) sowie einer dazwischenliegenden Schicht aus partikulärem Gettermaterial (25), bei der das Gettermaterial in einem textilen Flächengebilde lose eingebettet vorliegt und mehr als 50 Gew.-% der Gettermaterialschicht umfasst.

### Beispiele

Es wurden verschiedene mit einer Gettermaterialschicht versehene Liner hergestellt. Diese wurden mit verschiedenen Klebebändern mittels eines Labor-Walzenlaminators im Klimaraum bei 23 °C und einer relativen Luftfeuchte von 50 % laminiert.

### Klebebänder

Zur Herstellung von Klebebändern wurden verschiedene Haftklebemassen aus einer Lösung auf einen konventionellen, nicht erfindungsgemäßen permeationsdichten Liner des Typs ALU I 38 UV1 der Firma Mondi, enthaltend einen Träger aus Aluminiumfolie, mittels eines Laborstreichgeräts aufgebracht und getrocknet. Die Klebemassenschichtdicke nach dem Trocknen betrug jeweils 25 µm. Die Trocknung erfolgte jeweils bei 120 °C über 30 min in einem Labortrockenschrank.

### K1: Haftklebemasse

| | | |
|---|---|---|
| 100 Teile | Tuftec P 1500 | SBBS mit 30 Gew.-% Blockpolystyrolgehalt der Firma Asahi. |
| | | Das SBBS enthält ca. 68 Gew.-% Zweiblockgehalt. |
| 100 Teile | Escorez 5600 | Hydriertes KW-Harz mit einem Erweichungspunkt von 100 °C der Firma Exxon |
| 25 Teile | Ondina 917 | Weißöl aus paraffinischen und naphthenischen Anteilen der Firma Shell |

Als Lösungsmittel wurde ein Gemisch aus Toluol und Aceton im Verhältnis 2:1 verwendet.

### K2: Heißschmelzklebemasse

| | | |
|---|---|---|
| 100 Teile | Kraton FG 1924 | Maleinsäureanhydridmodifiziertes SEBS mit 13 Gew.-% Blockpolystyrolgehalt, 36 Gew.-% Zweiblock und 1 Gew.-% Maleinsäure der Firma Kraton |
| 25 Teile | Escorez 5600 | Hydriertes KW-Harz (Kohlenwasserstoffharz) mit einem Erweichungspunkt von 100 °C der Firma Exxon |
| 1 Teil | Aluminiumacetylacetonat | |

Als Lösungsmittel wurde ein Gemisch aus Toluol und Aceton im Verhältnis 2:1 verwendet.

### K3: Strahlenaktivierbare Heißschmelzklebemasse

| | | |
|---|---|---|
| 25 Teile | Epiclon 835 LV | Bisphenol-A und Bisphenol-F basiertes Epoxidharz der Firma DIC, Japan, Molekulargewicht M_{W} ca. 350 g/mol |
| 25 Teile | Epicote 1001 | Bisphenol basiertes Epoxidharz der Firma Mitsubishi Chemical Company, Japan, Molekulargewicht M_{W} ca. 900 g/mol |
| 50 Teile | YP-70 | Bisphenol-A und Bisphenol-F basiertes Phenoxyharz der Fa. Nippon Steel Chemical Group, Japan, Molekulargewicht M_{W} ca. 55.000 g/mol |
| 1,5 Teile | Irgacure 250 | lodonium-Salz-basierter UV-Photoinitiator der Fa. BASF (lodonium, (4-methylphenyl) [4-(2-methylpropyl) phenyl]-, hexafluorophosphate(1-)) |

Als Lösemittel wurde Methylethylketon verwendet.

### K4: Hitzeaktivierbare Klebemasse

| | | |
|---|---|---|
| 90 Teile | Ultramid 1C | Copolyamid 6/66/136 der Fa. BASF mit einer Viskositätszahl in 96 %iger Schwefelsäure nach ISO 307 von 122 ml/g |
| 10 Teile | EPR 166 | Bisphenol basiertes Epoxidharz der Firma Bakelite, Epoxidzahl von 184 |
| 20 Teile | PEG 2000 | Polyethylenglycol mit der mittleren Molmasse 2000 |
| 20 Teile | Foralyn 5040 | Klebharz der Firma Eastman |

Die Klebemasse wurde in einem Prozess, wie er in DE102006047739 A1 offengelegt ist, mit Ethanol als Lösemittel hergestellt.

Die Klebemasseschichten wurden über 72 Stunden bei 23°C und 50 % relativer Luftfeuchte (Klima A) gelagert. Der Wassergehalt der Klebemasseschichten wurde vor dem Zusammenbringen mit dem Liner jeweils ermittelt.

### Messung des Wassergehalts

Der Wassergehalt wurde ermittelt nach DIN 53715 (Karl-Fischer-Titration). Die Messung erfolgte an einem Karl-Fischer Coulometer 851 in Verbindung mit einem Ovensampler (Ofentemperatur 140 °C). Mit einer Einwaage von ca. 0,3 g wurde jeweils eine Dreifachbestimmung durchgeführt. Als Wassergehalt wird der arithmetische Mittelwert der Messungen angegeben.

| Klebemasseschicht | Wassergehalt [ppm] Klima A |
|---|---|
| K1 | 853 |
| K2 | 551 |
| K3 | 3216 |
| K4 | 16400 |

### Liner

### Trägermaterialien:

Als Trägermaterialien für den Liner wurden zum Einen ein ca. 75 µm dicker Polyesterträger (Lumirror 60.01/75 der Firma Toray Plastics, im Folgenden: PET) sowie eine circa 30 µm dicke, mit einer anorganischen Barrierschicht beschichtete Polyesterfolie (GX-P-F der Firma Toppan Printing, im Folgenden: Barriere-PET) verwendet.

Zum anderen wurde eine polyolefinbasierte Folie (PO) durch Flachfoliencoextrusion gefertigt. Sie bestand aus einer 50 µm dicken Basisschicht und einer 10 µm dicken Außenschicht. Die Basisschicht bestand aus 91,3 % (w/w) Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770.

Die Außenschicht bestand aus 85 % Ethylen-multi-Blockcopolymer Infuse D9107 (The Dow Chemical Company, d = 0,866 g/cm3) und 15 % Polyethylen LD251 (ExxonMobil, d = 0,9155). Das Außenschichtmaterial wurde wie auch die Basisschicht auf einer Extrusionsanlage der Fa. Dr. Collin extrudiert in den Feedblock der Coextrusionseinheit gefördert.

### Trennschichten:

Die Außenschicht der oben genannten Polyolefinfolie wurde auch als Trennschicht (PO) eingesetzt.

Beim verwendeten Silikonsystem handelt es sich um ein additionsvernetzendes Silikonsystem der Firma Wacker. 9,75 g DEH 915 (ein mit Vinylgruppen funktionalisiertes Polydimethylsiloxan) wurden mit 0,33 g V24 (ein Methylhydrogenpolysiloxan) und 0,08 g Kat OL (ein Platinkatalysator, auch unter dem Namen "Karstedt-Katalysator" bekannt) gemischt. Zuvor wurden beide Rohstoffe mittels Zeolithkugeln (Molecular Sieves 4 Ä des Lieferanten Sigma-Aldrich) bei 23 °C getrocknet.

Das Trennsystem wurde auf die mit einer Gettermaterialschicht versehenen Trägermaterialien beschichtet, indem die oben angegebene Trennsystem-Formulierung über eine Labor-Beschichtungsanlage aufgebracht wurde. Das Beschichtungsgewicht lag bei 2 g/m². Nach der Beschichtung wurden die Trennsysteme im Umluftofen 30 s lang bei 160 °C vernetzt.

### Verwendete Gettermaterialien:

| Bezeichnung | Beschreibung | Handelsname | Lieferant |
|---|---|---|---|
| G1 | Calciumoxid | Calcium oxide nanopowder | Sigma-Aldrich |
| G2 | Lithiumchlorid | Lithium chloride anhydrous | Sigma-Aldrich |
| G3 | Calcium | hochreines Calciumgranulat | Osnabruegge |
| G4 | Zeolith 3A | Purmol 3 STH | Zeochem |

Die Gettermaterialien G2 und G4 wurden für die Applikation in dünnen Schichten erforderlichenfalls gemahlen und gesiebt, so dass keine Partikel enthalten waren, die größer als die Schichtdicke waren. Nach dem Mahlprozess wurden diese Partikel durch Wärmebehandlung in dem Fachmann bekannter Weise regeneriert.

### Herstellung der Liner:

Die Herstellung der Liner erfolgte in einer Glovebox unter Stickstoffatmosphäre bei 23°C und 1 ppm Wassergehalt.

Liner mit den pulverförmigen Gettermaterialien G1, G2 und G4 wurden durch Aufstreuen einer Menge von etwa 2 g/m² mittels eines Siebes auf die Außenschichtseite der polyolefinbasierten Trägerfolie hergestellt.

Sodann wurde eine zweite polyolefinbasierte Trägerfolie mit der Basisschichtseite mittels einer Heizpresse bei 160 °C auf die Gettermaterialschicht laminiert.

Alternativ wurde mittels eines Laborlaminiergeräts mit Silikonwalzen bei 160 °C Walzentemperatur das Gettermaterial in der Außenschicht verfestigt. Sodann wurde eine Schicht des Silikontrennsystems wie oben beschrieben auf die Gettermaterialschicht aufgebracht.

Für Klebebänder mit Calcium als Gettermaterial wurde das Metall auf die PET- und die PET-Barrierefolie (hier auf die Seite mit der anorganischen Barriereschicht) im Vakuum aufgedampft, wobei jeweils eine Schichtdicke des Gettermaterials von etwa 300 nm hergestellt wurde. Sodann wurde eine Schicht des Silikontrennsystems wie oben beschrieben auf die Gettermaterialschicht aufgebracht.

Tabelle 1 zeigt die hergestellten Liner, die Schichten von Gettermaterial enthalten, im Überblick:

**Tabelle 1: Gettermaterial-gefüllte Liner**

| Bezeichnung | Trägermaterial | Gettermaterialschicht | Gettermenge [g/m²] | Trennschicht |
|---|---|---|---|---|
| L1 | PET | G3 | 0,47 | Silicon |
| L2 | Barriere-PET | G3 | 0,47 | Silicon |
| L3 | PO | G1 | 1 | Silicon |
| L4 | PO | G2 | 1 | Silicon |
| L5 | PO | G4 | 1 | Silicon |
| L6 | PO | G1 | 1 | PO |
| L7 | PO | G2 | 1 | PO |
| L8 | PO | G4 | 1 | PO |
| L9 (Vergleichsbeispiel) | PET | - | 0 | Silicon |

Zur weiteren Untersuchung wurden etwa 100 x 100 mm² große Klebebandabschnitte wie bereits oben beschrieben konditioniert und unmittelbar danach bei 23 °C und 50 % relativer Luftfeuchte mit dem Liner mittels eines Laborlaminators bei einer Walzentemperatur von 80 °C eingedeckt. Die so hergestellten Laminate wurden über 168 h in folgenden Klimata gelagert:
Klima B: 23 °C, verschlossen in vakuumierter, permeationsdichter Verpackung
Klima C: 23 °C, 95 % relative Luftfeuchtigkeit

Abschließend wurde bei den Mustern der Wassergehalt in der Klebemasse bestimmt. Proben wurden dabei aus der Mitte der Musterfläche entnommen, um Randeffekte zu vermeiden. Die Ergebnisse sind in Tabelle 2 zusammengefasst:

**Tabelle 2: Bestimmung des Wassergehalts**

| Beispiel | Liner | Klebemasse | Lagerklima Verbund | Wassergehalt Klebemasse [ppm] | |
|---|---|---|---|---|---|
| | | | | nach Konditionierung | nach Lagerung |
| 1 | L1 | K1 | Klima B | 853 | 309 |
| 2 | L2 | K1 | Klima B | 853 | 285 |
| 3 | L3 | K1 | Klima B | 853 | 212 |
| 4 | L4 | K1 | Klima B | 853 | 125 |
| 5 | L5 | K1 | Klima B | 853 | 388 |
| 6 | L6 | K1 | Klima B | 853 | 259 |
| 7 | L7 | K1 | Klima B | 853 | 186 |
| 8 | L8 | K1 | Klima B | 853 | 518 |
| 9 | L1 | K1 | Klima C | 853 | 1180 |
| 10 | L2 | K1 | Klima C | 853 | 491 |
| 11 | L3 | K1 | Klima C | 853 | 1220 |
| 12 | L4 | K1 | Klima C | 853 | 852 |
| 13 | L5 | K1 | Klima C | 853 | 1160 |
| 14 | L6 | K1 | Klima C | 853 | 1190 |
| 15 | L7 | K1 | Klima C | 853 | 817 |
| 16 | L8 | K1 | Klima C | 853 | 1290 |
| 17 | L1 | K2 | Klima B | 551 | 208 |
| 18 | L2 | K2 | Klima B | 551 | 133 |
| 19 | L3 | K2 | Klima B | 551 | 95 |
| 20 | L6 | K2 | Klima B | 551 | 136 |
| 21 | L1 | K2 | Klima C | 551 | 803 |
| 22 | L2 | K2 | Klima C | 551 | 263 |
| 23 | L3 | K2 | Klima C | 551 | 806 |
| 24 | L6 | K2 | Klima C | 551 | 785 |
| 25 | L1 | K3 | Klima B | 3216 | 593 |
| 26 | L2 | K3 | Klima B | 3216 | 459 |
| 27 | L3 | K3 | Klima B | 3216 | 310 |
| 28 | L6 | K3 | Klima B | 3216 | 382 |
| 29 | L1 | K3 | Klima C | 3216 | 5200 |
| 30 | L2 | K3 | Klima C | 3216 | 641 |
| 31 | L3 | K3 | Klima C | 3216 | 4650 |
| 32 | L6 | K3 | Klima C | 3216 | 4650 |
| 33 | L1 | K4 | Klima B | 16400 | 3390 |
| 34 | L2 | K4 | Klima B | 16400 | 2650 |
| 35 | L3 | K4 | Klima B | 16400 | 1770 |
| 36 | L6 | K4 | Klima B | 16400 | 1690 |
| 37 | L1 | K4 | Klima C | 16400 | 34440 |
| 38 | L2 | K4 | Klima C | 16400 | 5310 |
| 39 | L3 | K4 | Klima C | 16400 | 31490 |
| 40 | L6 | K4 | Klima C | 16400 | 34800 |
| | | | | | |

| Vergleichsbeispiele | | | | | |
|---|---|---|---|---|---|
| V1 | L9 | K1 | Klima B | 853 | 965 |
| V2 | L9 | K2 | Klima B | 551 | 657 |
| V3 | L9 | K3 | Klima B | 3216 | 3840 |
| V4 | L9 | K4 | Klima B | 16400 | 16940 |
| V5 | L9 | K1 | Klima C | 853 | 1337 |
| V6 | L9 | K2 | Klima C | 551 | 894 |
| V7 | L9 | K3 | Klima C | 3216 | 6882 |
| V8 | L9 | K4 | Klima C | 16400 | 38700 |

Die Ergebnisse zeigen, dass erfindungsgemäße Liner geeignet sind, Permeate von Klebebändern fernzuhalten beziehungsweise die eindringende Permeatmenge zu begrenzen (Beispiele 9-16, 21-24, 29-32, 37-40 im Vergleich zu den Vergleichsbeispielen V5 - V 8).

Besonders vorteilhaft ist es, wenn der Liner eine Barriereschicht gegen ein oder mehrere Permeat(e) enthält beziehungsweise wenn das Trägermaterial selbst eine starke Barrierewirkung gegen das Permeat aufweist (L2), da dann die Getterkapazität ausreicht, nicht nur die gesamte einwirkende Permeatmenge abzufangen, sondern darüber hinaus auch noch die bereits in der Klebemasse vorliegende Permeatmenge zu reduzieren (Beispiele 10, 22, 30, 38).

Die überraschend gute Eignung der erfindungsgemäßen Liner zur Entfernung von Permeaten aus Klebebändern zeigen auch die Beispiele 1-8, 17-20, 25-28, 33-36.

## Patentansprüche

1. Liner zum Schutz von Klebemassen, enthaltend
mindestens eine abhäsive Trennschicht,
mindestens eine Schicht eines zur Sorption mindestens von Wasser befähigten Gettermaterials, wobei das Gettermaterial ausgewählt ist aus Lithium, Beryllium, Bor, Natrium, Magnesium, Silizium, Kalium, Calcium, Mangan, Nickel, Zink, Gallium, Germanium, Cadmium, Indium, Cäsium, Barium, Boroxid, Calciumoxid, Chromoxid, Manganoxid, Eisenoxid, Kupferoxid, Silberoxid, Indiumoxid, Bariumoxid, Bleioxid, Phosphoroxid, Natriumhydroxid, Kaliumhydroxid, Metallsalzen, Metallhydriden, Anhydriden von einfachen und mehrfachen Carbonsäuren, Natriumdithionit, Carbohydrazid, Ascorbaten, Gallussäure, Zeolithen, Kohlenstoffnanoröhrchen und Carbodiimiden sowie Mischungen von zwei oder mehreren der vorstehenden Substanzen und
mindestens eine Trägerschicht.

2. Liner gemäß Anspruch 1, **dadurch gekennzeichnet, dass** der Liner eine Barriereschicht gegen ein oder mehrere spezifische(s) Permeat(e) enthält.

3. Liner gemäß mindestens einem der vorstehenden Ansprüche, **dadurch gekennzeichnet, dass** das Gettermaterial ausgewählt ist aus Magnesium, Calcium, Mangan, Nickel, Zink, Barium, Bariumoxid, Bortrioxid, Calciumchlorid, Calciumoxid, Calciumsulfat, Kupfersulfat, Lithiumchlorid, Lithiumbromid, Magnesiumchlorid, Magnesiumperchlorat, Magnesiumsulfat, Phosphoroxid, Kaliumcarbonat, Kaliumhydroxid, Natrium, Natriumhydroxid, Natriumsulfat, Zinkchlorid, Carbodiimiden und Zeolithen sowie Mischungen von zwei oder mehreren der vorstehenden Substanzen.

4. Liner gemäß mindestens einem der Ansprüche 1 bis 3, **dadurch gekennzeichnet, dass** das Gettermaterial ausgewählt ist aus Magnesium, Calcium, Barium, Calciumoxid, Chromoxid, Manganoxid, Eisenoxid, Kupferoxid, Silberoxid und Bariumoxid sowie Mischungen von zwei oder mehreren der vorstehenden Substanzen.

5. Liner gemäß mindestens einem der Ansprüche 1 und 2, **dadurch gekennzeichnet, dass** das Gettermaterial ausgewählt ist aus Calciumoxid, Calciumsulfat, Calciumchlorid, Natriumsulfat, Kaliumcarbonat, Kupfersulfat, Magnesiumperchlorat und Magnesiumsulfat sowie Mischungen von zwei oder mehreren der vorstehenden Substanzen.

6. Liner gemäß mindestens einem der Ansprüche 1 und 2, **dadurch gekennzeichnet, dass** das Gettermaterial ausgewählt ist aus Magnesium, Calcium, Barium, Calciumoxid, Calciumsulfat, Calciumchlorid und Zeolithen sowie Mischungen von zwei oder mehreren der vorstehenden Substanzen.

7. Liner gemäß mindestens einem der Ansprüche 1 und 2, **dadurch gekennzeichnet, dass** das Gettermaterial ausgewählt ist aus Calcium, Barium, Lithiumchlorid und Calciumoxid sowie Mischungen von zwei oder mehreren der vorstehenden Substanzen.

8. Liner gemäß mindestens einem der vorstehenden Ansprüche, **dadurch gekennzeichnet, dass** das Gettermaterial den Permeaten durch Chemisorption bindet.

9. Liner gemäß mindestens einem der vorstehenden Ansprüche, **dadurch gekennzeichnet, dass** die Schicht aus Gettermaterial porös und/oder geschäumt ist.

10. Klebemasse, zumindest einseitig und zumindest partiell bedeckt mit einem Liner gemäß mindestens einem der vorstehenden Ansprüche.

11. Klebemasse gemäß Anspruch 10, **dadurch gekennzeichnet, dass** die Klebemasse vor dem Inkontaktbringen mit dem Liner einen Permeatgehalt von weniger als 1000 ppm aufweist.

12. Verwendung eines Liners gemäß mindestens einem der Ansprüche 1 bis 9 zum zumindest einseitigen und zumindest partiellen Bedecken eines Klebebandes in Verfahren zur Verkapselung optoelektronischer Bauelemente und/oder einer aerob härtenden Klebemasse und/oder einer feuchtigkeitshärtenden Klebemasse.

13. Verwendung eines Liners gemäß Anspruch 7 zur Indikation des Permeatgehalts einer mit dem Liner bedeckten Klebemasse.

## Claims

1. Liner for the protection of adhesives, comprising
at least one abhesive release layer,
at least one layer of a getter material capable of sorbing at least water, the getter material being selected from lithium, beryllium, boron, sodium, magnesium, silicon, potassium, calcium, manganese, nickel, zinc, gallium, germanium, cadmium, indium, caesium, barium, boron oxide, calcium oxide, chromium oxide, manganese oxide, iron oxide, copper oxide, silver oxide, indium oxide, barium oxide, lead oxide, phosphorus oxide, sodium hydroxide, potassium hydroxide, metal salts, metal hydrides, anhydrides of single and multiple carboxylic acids, sodium dithionite, carbohydrazide, ascorbates, gallic acid, zeolites, carbon nanotubes and carbodiimides and also mixtures of two or more of the above substances, and
at least one carrier layer.

2. Liner according to Claim 1, **characterized in that** the liner comprises a barrier layer against one or more specific permeates.

3. Liner according to at least one of the preceding claims, **characterized in that** the getter material is selected from magnesium, calcium, manganese, nickel, zinc, barium, barium oxide, boron trioxide, calcium chloride, calcium oxide, calcium sulfate, copper sulfate, lithium chloride, lithium bromide, magnesium chloride, magnesium perchlorate, magnesium sulfate, phosphorus oxide, potassium carbonate, potassium hydroxide, sodium, sodium hydroxide, sodium sulfate, zinc chloride, carbodiimides and zeolites and also mixtures of two or more of the above substances.

4. Liner according to at least one of Claims 1 to 3, **characterized in that** the getter material is selected from magnesium, calcium, barium, calcium oxide, chromium oxide, manganese oxide, iron oxide, copper oxide, silver oxide and barium oxide and also mixtures of two or more of the above substances.

5. Liner according to at least one of Claims 1 and 2, **characterized in that** the getter material is selected from calcium oxide, calcium sulfate, calcium chloride, sodium sulfate, potassium carbonate, copper sulfate, magnesium perchlorate and magnesium sulfate and also mixtures of two or more of the above substances.

6. Liner according to at least one of Claims 1 and 2, **characterized in that** the getter material is selected from magnesium, calcium, barium, calcium oxide, calcium sulfate, calcium chloride and zeolites and also mixtures of two or more of the above substances.

7. Liner according to at least one of Claims 1 and 2, **characterized in that** the getter material is selected from calcium, barium, lithium chloride and calcium oxide and also mixtures of two or more of the above substances.

8. Liner according to at least one of the preceding claims, **characterized in that** the getter material binds the permeate by chemisorption.

9. Liner according to at least one of the preceding claims, **characterized in that** the layer of getter material is porous and/or foamed.

10. Adhesive covered at least on one side and at least partially with a liner according to at least one of the preceding claims.

11. Adhesive according to Claim 10, **characterized in that** the adhesive before being contacted with the liner has a permeate content of less than 1000 ppm.

12. Use of a liner according to at least one of Claims 1 to 9 for at least one-sided and at least partial covering of an adhesive tape in methods for the encapsulation of optoelectronic components and/or of an aerobically curing adhesive and/or of a moisture-curing adhesive.

13. Use of a liner according to Claim 7 for indicating the permeate content of an adhesive covered with the liner.

## Revendications

1. Revêtement destiné à la protection de masses adhésives, contenant
au moins une couche de séparation non adhérente,
au moins une couche d'un matériau d'absorption apte à absorber au moins de l'eau, le matériau d'absorption étant choisi parmi le lithium, le béryllium, le bore, le sodium, le magnésium, le silicium, le potassium, le calcium, le manganèse, le nickel, le zinc, le gallium, le germanium, le cadmium, l'indium, le césium, le baryum, l'oxyde de bore, l'oxyde de calcium, l'oxyde de chrome, l'oxyde de manganèse, l'oxyde de fer, l'oxyde de cuivre, l'oxyde d'argent, l'oxyde d'indium, l'oxyde de baryum, l'oxyde de plomb, l'oxyde de phosphore, l'hydroxyde de sodium, hydroxyde de potassium, les sels métalliques, les hydrures métalliques, les anhydrides d'acides monocarboxyliques et polycarboxyliques, le dithionite de sodium, le carbohydrazide, les ascorbates, l'acide gallique, les zéolithes, les nanotubes de carbone et les carbodiimides ainsi que les mélanges de deux, ou plus, des substances ci-dessus et
au moins une couche support.

2. Revêtement selon la revendication 1, **caractérisé en ce que** le revêtement contient une couche formant barrière contre un ou plusieurs perméat(s) spécifique(s).

3. Revêtement selon au moins l'une des revendications précédentes, **caractérisé en ce que** le matériau d'absorption est choisi parmi le magnésium, le calcium, le manganèse, le nickel, le zinc, le baryum, l'oxyde de baryum, le trioxyde de bore, le chlorure de calcium, l'oxyde de calcium, le sulfate de calcium, le sulfate de cuivre, le chlorure de lithium, le bromure de lithium, le chlorure de magnésium, le perchlorate de magnésium, le sulfate de magnésium, l'oxyde de phosphore, le carbonate de potassium, l'hydroxyde de potassium, le sodium, l'hydroxyde de sodium, le sulfate de sodium, le chlorure de zinc, les carbodiimides et les zéolithes ainsi que les mélanges de deux, ou plus, des substances ci-dessus.

4. Revêtement selon au moins l'une des revendications 1 à 3, **caractérisé en ce que** le matériau d'absorption est choisi parmi le magnésium, le calcium, le baryum, l'oxyde de calcium, l'oxyde de chrome, l'oxyde de manganèse, l'oxyde de fer, l'oxyde de cuivre, l'oxyde d'argent et l'oxyde de baryum ainsi que les mélanges de deux, ou plus, des substances ci-dessus.

5. Revêtement selon au moins l'une des revendications 1 et 2, **caractérisé en ce que** l'agent d'absorption est choisi parmi l'oxyde de calcium, le sulfate de calcium, le chlorure de calcium, le sulfate de sodium, le carbonate de potassium, le sulfate de cuivre, le perchlorate de magnésium et le sulfate de magnésium ainsi que les mélanges de deux, ou plus, des substances ci-dessus.

6. Revêtement selon au moins l'une des revendications 1 et 2, **caractérisé en ce que** le matériau d'absorption est choisi parmi le magnésium, le calcium, le baryum, l'oxyde de calcium, le sulfate de calcium, le chlorure de calcium et les zéolithes ainsi que les mélanges de deux, ou plus, des substances ci-dessus.

7. Revêtement selon au moins l'une des revendications 1 et 2, **caractérisé en ce que** le matériau d'absorption est choisi parmi le calcium, le baryum, le chlorure de lithium et l'oxyde de calcium ainsi que les mélanges de deux, ou plus, des substances ci-dessus.

8. Revêtement selon au moins l'une des revendications précédentes, **caractérisé en ce que** le matériau d'absorption lie les perméats par chimisorption.

9. Revêtement selon au moins l'une des revendications précédentes, **caractérisé en ce que** la couche en matériau d'absorption est poreuse et/ou moussée.

10. Masse adhésive, revêtue au moins sur une face et au moins partiellement par un revêtement selon au moins l'une des revendications précédentes.

11. Masse adhésive selon la revendication 10, **caractérisée en ce que** la masse adhésive présente, avant la mise en contact avec le revêtement, une teneur en perméats inférieure à 1000 ppm.

12. Utilisation d'un revêtement selon au moins l'une des revendications 1 à 9 pour le recouvrement au moins sur une face et au moins partiel d'un ruban adhésif dans un procédé destiné à encapsuler des composants optoélectroniques et/ou d'une masse adhésive durcissant de manière aérobie et/ou d'une masse adhésive durcissant sous l'effet de l'humidité.

13. Utilisation d'un revêtement selon la revendication 7 pour l'indication de la teneur en perméat(s) d'une masse adhésive recouverte par le revêtement.
